Europäisches Patentamt

European Patent Office

Office européen des brevets

(19)

(11) Veröffentlichungsnummer : **0 025 871**
**B1**

(12) EUROPÄISCHE PATENTSCHRIFT

(45) Veröffentlichungstag der Patentschrift :
30.03.83

(21) Anmeldenummer : **80104893.5**

(22) Anmeldetag : **16.08.80**

(51) Int. Cl.³ : **B 29 D 27/02, G 05 D 11/13**

(54) Verfahren zum Herstellen eines Reaktionsgemisches aus fliessfähigen, Schaum- oder Massivstoff bildenden Komponenten.

(30) Priorität : 07.09.79 DE 2936223

(43) Veröffentlichungstag der Anmeldung :
01.04.81 Patentblatt 81/13

(45) Bekanntmachung des Hinweises auf die Patenterteilung : 30.03.83 Patentblatt 83/13

(84) Benannte Vertragsstaaten :
AT BE CH DE FR GB IT LI NL

(56) Entgegenhaltungen :
EP A 0 003 224
EP A 0 003 563
DE A 2 364 922
DE A 2 403 647
DE A 2 724 132
DE B 2 527 378

(73) Patentinhaber : BAYER AG
Zentralbereich Patente, Marken und Lizenzen
D-5090 Leverkusen 1, Bayerwerk (DE)

(72) Erfinder : Coblenz, Rolf
Waldhausstrasse 50
D-5000 Köln 80 (DE)
Erfinder : Schulte, Klaus
Opladener Strasse 5
D-5090 Leverkusen 1 (DE)
Erfinder : Ebeling, Wilfried
Vor Selkoren 29
D-5000 Köln 80 (DE)
Erfinder : Evertz, Dieter
Opladener Strasse 5
D-5090 Leverkusen 1 (DE)

Jouve, 18, rue St-Denis, 75001 Paris, France

# 0 025 871

Verfahren zum Herstellen eines Reaktionsgemisches aus fließfähigen, Schaum- oder Massivstoff bildenden Komponenten

Die Erfindung bezieht sich auf ein Verfahren zum Herstellen eines Reaktionsgemisches durch Injektion fließfähiger, Schaum- oder Massivstoff bildender Komponenten in eine Mischkammer, wobei die Komponenten

a) kontinuierlich gefördert und
ba) miteinander vermischt oder
bb) im Kreislauf geführt werden und wobei für jede Komponente
c) die Durchsatzmenge vorgewählt wird,
d) der Injektionsdruck grob eingestellt wird und
e) der Kreislaufdruck grob eingegrenzt wird,
f) die Durchsatzmenge und der Kreislaufdruck durch verstellung einer Dosierpumpe bzw. eines Drosselorgans geregelt werden und
g) die vorgewählten Werte gemäß c) und e) in einen Steuerungsrechner eingespeist werden.

Mittels des erzeugten Reaktionsgemisches werden Hohlräume ausgefüllt und insbesondere in Formwerkzeugen Formteile gefertigt. Zum Erzielen eines einwandfreien Endproduktes müssen die Durchsatzmengen der Komponenten, die von verschiedenen Faktoren, wie Viskosität, Temperatur, Druck, abhängig sind, laufend überwacht werden. Da diese Faktoren durch Schwankungen in der beschaffenheit der Komponenten und durch Toleranzen in der Arbeitsweise der Einrichtung bedingt sind, können sie durch vorbeugende Maßnahmen nicht völlig konstant gehalten werden. Man ist deshalb gezwungen, bei Veränderung dieser Faktoren die Durchsatzmenge konstant zu halten.

Bei den bekannten Einrichtungen testet man die Dosierpumpen, indem man bei verschiedenen Pumpenregelwegeinstellungen die pro Zeiteinheit geförderte Menge bei einem bestimmten Druck auslaufen läßt und anschließend wiegt. Nach den so ermittelten Pumpenkennlinien, die auf der Abhängigkeit der Fördermenge Q als Funktion (f) des Regelweges der Pumpen basieren, wird im richtigen vorgeschriebenen stöchiometrischen Verhältnis die Mischeinrichtung einjustiert. Dies geschieht vor Produktionsbeginn. Die Einhaltung der ermittelten Werte kann während der Produktion nicht kontrolliert werden. Der gesamte zeitraubende, aufwendige Testablauf muß deshalb in bestimmten Abständen wiederholt werden, damit eine ausreichende Produktionssicherheit gegeben ist. Diese Testmethode trägt weiterhin einen großen Unsicherheitsfaktor in sich, da die Gewichtsmessung ausschließlich unter Atmosphärendruck vorgenommen wird und, sofern Treibmittel in der Komponente enthalten ist, dieses wegen seines niedrigen Siedepunktes unter Umständen entweichen kann.

Es ist auch schon versucht worden, den Komponentenstrom kontinuierlich in einen Hauptstrom und einen Nebenstrom zu verzweigen, wobei der Nebenstrom auf den gleichen Arbeitsdruck, unter dem auch der Hauptstrom kurz vor dem Einbringen in die Mischzone steht, gebracht wird, der Volumenstrom des Nebenstromes gemessen wird, die während eines vorgegebenen Zeitintervalls durchgelaufene Volumenmenge des Nebenstromes durch Messen ermittelt wird, die während des gleichen vorgegebenen Zeitintervalls durchgelaufene Gewichtsmenge durch Wiegen festgestellt wird, daraus die Dichte der Komponente als Quotient der Gewichtsmenge und der Volumenmenge ermittelt wird und der Massenstrom des Hauptstromes der Komponente als Produkt der Dichte der Komponente und des Volumenstromes des Hauptstromes ermittelt wird (DE-A-2 724 132).

Diese Verfahrensweise ist nicht nur in überwachungstechnischer Hinsicht sondern auch im apparativen Aufbau sehr aufwendig.

Es stellt sich die Aufgabe, ein Verfahren zur sicheren, selbsttätigen Einregelung und Überwachung der Durchsatzmengen während der Injektion und des Kreislaufs bei vorgegebenen Drücken zu schaffen.

Diese Aufgabe wird durch das erfindungsgemäße Verfahren gelöst, indem
h) der Mischvorgang eingeleitet wird,
i) der Injektionsdruck gemessen und der Meßwert abgespeichert wird,
j) auf Kreislaufförderung rückgeschaltet wird,
k) der gemessene und abgespeicherte Wert des Injektionsdruckes als neuer Sollwert für den Kreislaufdruck verwendet wird und
l) der Meß- und Regelvorgang gemäß f) und h) bis k) fortlaufend erneut eingeleitet wird.

Dieses iterative Regelverfahren erlaubt die automatische Überwachung der Durchsatzmenge. Der besondere Vorteil liegt darin, daß die Überwachung kontinuierlich erfolgt und keine Unterbrechung des eigentlichen Arbeitsablaufes erforderlich ist.

In einer Zeichnung ist eine geeignete Einrichtung zur Durchführung des neuen Verfahrens in einem Ausführungsbeispiel für eine Komponente rein schematisch dargestellt. Es zeigen :
Figur 1  die Einrichtung in Kreislaufstellung und
Figur 2  die Einrichtung in Injektionsstellung.

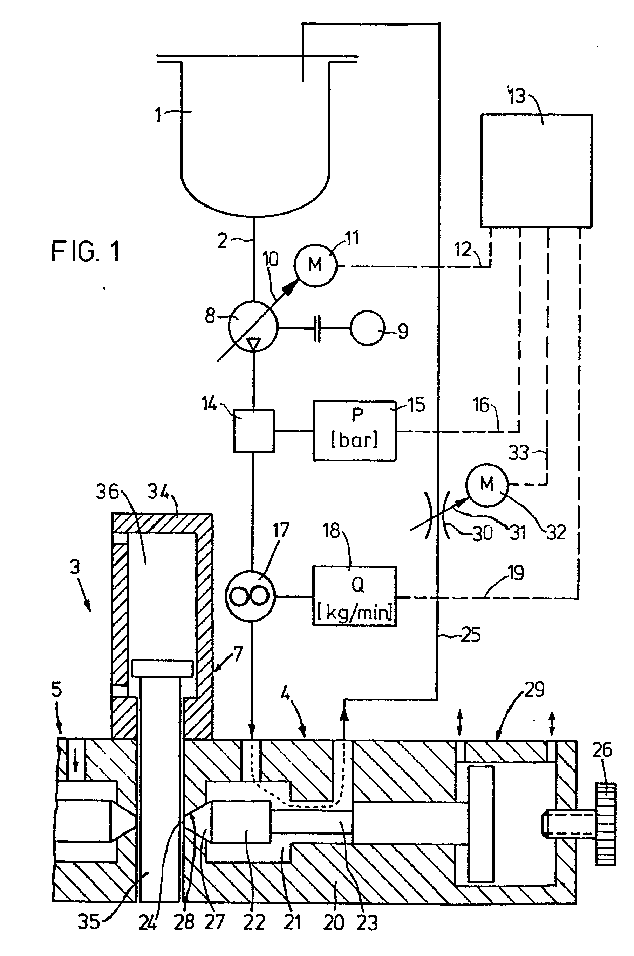

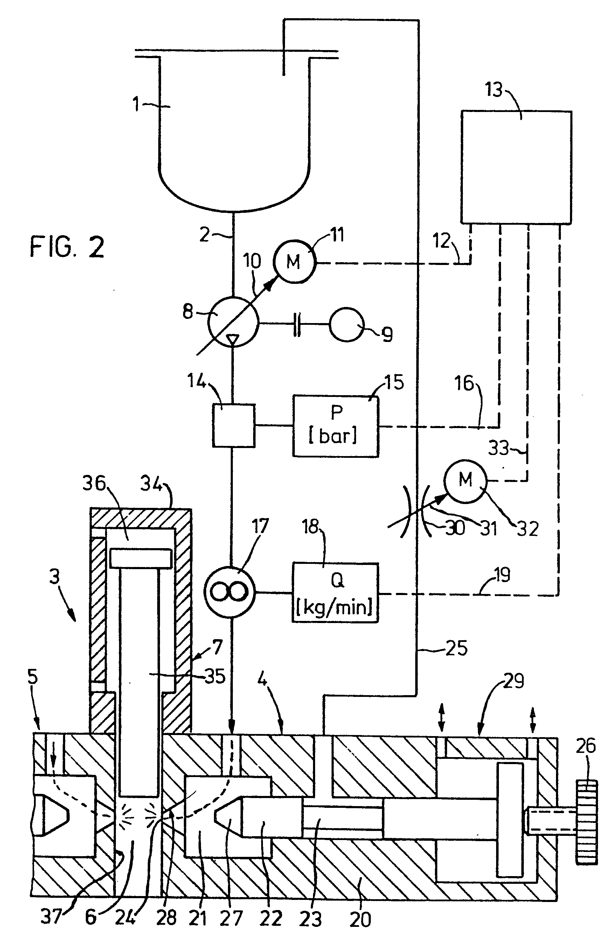

Für die Zuführung einer zweiten oder jeder weiteren Komponente ist die Einrichtung analog zu erweitern. Von einem Vorratsbehälter 1 führt eine Zuleitung 2 zu einem Mischkopf 3. Dieser besteht aus Düsen 4,5, einer Mischkammer 6 (Fig. 2) und einer Reingungsvorrichtung 7. In der Zuleitung 2 ist eine Dosierpumpe 8 vorgesehen, der ein mit konstanter Drehzahl arbeitender Antrieb 9 zugeordnet ist. Außerdem weist die Dosierpumpe 8 eine durch einen Pfeil symbolisierte Verstellvorrichtung 10 auf, der ein als Servomotor ausgebildetes Stellglied 11 zugeordnet ist. Dieses ist über eine Impulsleitung 12 mit einem Steuerungsrechner 13 verbunden. Ein in der Zuleitung 2 angeordnetes Druckmeßgerät 14 ist mit einem Druckanzeigegerät 15 gekoppelt und über eine Impulsleitung 16 an den Steuerungsrechner 13 angeschlossen. Schließlich ist in der Zuleitung 2 auch noch ein Mengendurchflußmesser 17 eingeschaltet, der mit einem Mengenanzeigegerät 18 gekoppelt ist und über eine Impulsleitung 19 mit dem Steuerungsrechner 13 in Verbindung steht. Die Zuleitung 2 mündet in das Düsengehäuse 20 ein. Darin ist in einer Bohrung 21 eine Düsennadel 22 geführt, die einen Kreislaufkanal 23 aufweist und die in die Mischkammer 6 weisende Düsenöffnung 24 in Fig. 1 verschließt, in Fig. 2 aber freigibt. Von diesem Gehäuse 20 zweigt eine Rücklaufleitung 25 ab und mündet in den Vorratsbehälter 1. In Fig. 1 stellt der Kreislaufkanal 23 über die Bohrung 21 die Verbindung mit der Rücklaufleitung 25 her, während in Fig. 2 die Düsennadel 22 jene Zirkulation unterbricht, so daß die Komponente über die Düsenöffnung 24 in die Mischkammer eintreten kann. Der Hub der Düsennadel 22 ist mittels einer als Stellschraube ausgebildeten Hubverstelleinrichtung 26 einstellbar, wodurch der freie Durchströmquerschnitt zwischen der Spitze 27 der Düsennadel 22 und dem Düsensitz 28 einjustiert werden kann. Die Düsennadel 22 ist über einen Hydraulikmotor 29 schaltbar. In der Rücklaufleitung 25 ist ein Drosselorgan 30 angeordnet, das eine Verstelleinrichtung 31, die durch einen Pfeil symbolisiert ist, aufweist. Letztere ist mit einem als Stellglied 32 dienenden Servomotor gekoppelt. Dieser ist über eine Impulsleitung 33 mit dem Steuerungsrechner 13 verbunden. Die Reinigungsvorrichtung 7 besteht aus einem Gehäuse 34, in dem ein Reinigungskolben 35 geführt ist. Er ist durch einen Hydraulikmotor 36 betätigbar. In Fig. 1 befindet sich der Reinigungskolben 35 in Ausstoßstellung und hat das Gemisch aus der Mischkammer verdrängt, während er in Fig. 2 die Mischstellung einnimmt, so daß in seiner Führungsbohrung 37 die Mischkammer 6 gebildet ist.

Im folgenden sei der Verfahrensablauf anhand der oben beschriebenen Einrichtung erläutert :

Wie bereits festgestellt, ist die Förderleistung der Dosierpumpe vom Gegendruck abhängig. Dabei ist die Durchsatzmenge Q als Funktion des Regelweges Rw der Verstelleinrichtung der Dosierpumpe gegeben. Zum anderen besteht ein Abhängigkeit des Arbeitsdruckes vom Stellweg des Drosselorgans 30 bei verschiedenen Durchsatzmengen. Das heißt, der Druck p ist eine Funktion f des Stellweges s des Drosselorgans 30. Es gilt nun, diese beiden Abhängigkeiten $Q = f (Rw)$ und $p = f (s)$ steuerungstechnisch in Einklang zu bringen. Der am Anzeigegerät 15 in bar ablesbare Druck und die am Anzeigegerät 18 in kg/min in ablesbare Durchsatzmenge sind dabei die Führungsgrößen. Das Stellglied 11 für die Regelwegverstellvorrichtung 10 der Dosierpumpe 8 und das Stellglied 32 für die Verstellvorrichtung 31 des Drosselweges des Drosselorgans 30 sowie die als Anschlagschraube 26 ausgebildete Verstelleinrichtung für den Hub der Injektionsdüsennadel 22 sind die Stellgrößen.

Nun beginnt der eigentliche Regelprozeß, indem in den Steuerungsrechner 13, der die Führungs- und Stellgrößen verarbeitet, zunächst die Sollwerte eingespeist werden.

Die Durchsatzmenge für eine Komponente soll z. B. 10 kg/min bei einer maximalen Abweichung von ± 0,1 kg/min betragen. Der Injektionsdruck soll zwischen 120 und 180 bar liegen. Das ist derjenige Druckbereich, von dem man bei dem zu verarbeitenden Gemisch erfahrungsgemäß weiß, daß die Injektionsvermischung ausreichend intensiv genug ist. Als Vorgabedruck für den Kreislauf wird in vorteilhafter Weise der Mittelwert des Injektionsdruckbereiches, der bei 150 bar liegt, gewählt. Der sich bei der Regelung einstellende tatsächliche Druck soll mit einer Genauigkeit von ± 2 bar eingehalten bzw. eingeregelt werden.

Während die Einrichtung auf Kreislaufförderung geschaltet ist, wird zunächst eine Grobvorwahl der Stellglieder vorgenommen. Der Verstellmotor 11 für die Verstelleinrichtung 10 der Dosierpumpe 8 fährt auf einen Regelweg von 2,3 mm, was einem Durchsatz von 9,4 kg/min entspricht. Der Verstellmotor 32 für die Verstellvorrichtung 31 des Drosselorgans 30 fährt auf einen Weg von 2,07 mm. Bei diesen Bedingungen stellt sich ein Arbeitsdruck an dem Druckanzeigegerät 15 von 138 bar ein. Nun beginnt die Regelung gemäß folgendem Schema :

(Siehe die Tabellen, Seiten 4 und 5)

Kreislauf       Injektion (Mischen)

Grobvorwahl     Grobvorwahl            Grobvorwahl
Dosierpumpe     Drosselorgan               Düse

Rw= 2,3 mm     s= 2,07 mm
Q = 9,4 kg/min   p= 138 bar
                 ↓ regelt

Rw= 2,3    ←ergibt   p= 150
Q = 9,27          s= 2,28

regelt ↓

Q = 10,0   ergibt→   s= 2,28
Rw= 3,37           p= 180
                 ↓ regelt

Rw= 3,37   ←ergibt   p= 150
Q =10,35          s= 1,74

regelt ↓

Q = 10,0   ergibt→   s= 1,74
Rw= 2,85           p= 1,38
                 ↓ regelt

Rw= 2,89   ←ergibt   p= 150
Q = 9,86          s= 2,02

regelt ↓

Q = 10,0   ergibt→   s= 2,02
Rw= 3,08           p= 155
                 ↓ regelt

Rw= 3.08   ←ergibt   p= 150
Q =10.11          s= 1,9

regelt ↓

Q = 10,0   ergibt→   s= 1,9
Rw= 3,0           p= 148

1.Regelschr. im Kreislauf
2.Schritt
3.Schritt
4.Schritt

Werte im Toleranzbereich → Rw= 3,0 →
Freigabe zur Injektion

nein → neue Justierung der Düse von Hand

↑
Druckwerte im Toleranzbereich?
↓
ja — ergibt → p= 135

neuer Sollwert p= 135 bar      Rückschaltung Wert
                               auf Kreislauf speichern

Q = 10,0  alte Ein-  p= 148
Rw=  3,0  stellung   s= 1,9
                        ↓ regelt                    5. Schritt

Rw= 3,0    ← ergibt    p= 135
Q =10,15               s= 1,6

regelt ↓                  –
                                                    6. Schr.
Q = 10,0   ergibt →    s= 1,6
Rw=  2,8               p= 130
                        ↓ regelt

Rw= 2,8    ← ergibt    p= 135       nein → neue
Q = 9,95               s= 173              Justierung
                                           der Düse
Werte im Toleranzbereich → Rw= 2,8 → im    von Hand
Freigabe zur Injektion             Druck
                                   werte
                                   im
                                   Toleranz
                                   bereich

                               ↓
                        ja  ergibt →  p= 130

1. iterativer Regelschritt Injektion/Kreislauf

neuer Sollwert p 130bar        Rückschaltung Wert
                               auf Kreislauf speichern

Q = 9,95  alte Ein-  p= 135
Rw= 2,8   stellung   s= 1,73
                        ↓ regelt                    7. Schr.

Rw= 2,8    ergibt    p= 130        nein → neue
Q = 10,0             s= 1,6               Justierung
                                          der Düse
Werte im Toleranzbereich → Rw= 2,8 → im   von Hand
Freigabe zur Injektion             Druck
                                   werte
                                   im
                                   Toleranz
                                   bereich

                               ↓
                        ja  ergibt →  p= 130

2. Schritt

Wie die Regelschritte im Kreislauf anzeigen, hat sich bereits nach dem vierten Regelschritt ein Werteniveau mit Q = 10,0 kg/min und mit p = 148 bar eingestellt, das in den zulässigen Abweichungen liegt.

Nach der Umschaltung auf Injektion, womit der Mischvorgang eingeleitet wird, erfolgt zunächst ein Druckvergleich. Befindet sich der effektive Injektionsdruck nicht im vorgegebenen Druckbereich von 120 bis 180 bar, muß die Verstellvorrichtung 26 der Düsennadel 22 von Hand erneut einjustiert werden. Befindet sich der Injektionsdruck innerhalb des genannten Druckbereiches, so wird der sich tatsächlich einstellende Druck im Steuerungsrechner 13 registriert und gilt nach Rückschaltung auf Kreislauf als neuer Sollwert bzw. als neue Führungsgröße. Im obigen Beispiel beträgt dieser Wert 135 bar. Nun folgen die weiteren Regelschritte im Kreislauf, bis die Werte innerhalb des neuen Toleranzbereiches liegen. Dann wiederum wird auf Injektion umgeschaltet und der sich einstellende Injektionsdruck wird im Steuerungsrechner 13 registriert. Stimmen Kreislaufdruck und Injektionsdruck noch nicht überein, wird im Kreislauf weiter nachgeregelt, wobei nun der zuletzt registrierte Wert des Injektionsdruckes als neuer Sollwert für den Kreislaufdruck gilt. Im Beispiel beträgt er 130 bar. Kreislaufdruck und Injektionsdruck nähern sich iterativ. Weitere Abgleich- und Regelschritte können vollzogen werden. Im vorgeschriebenen Beispiel stellt man nach neuerlicher Umschaltung zur Injektion Gleichheit im Druckniveau bei vorgegebenem Mengendurchsatz unter zulässigen Abweichungen fest. Nach nur drei Regel- bzw. Abgleichvorgängen hat sich somit die Einrichtung interativ dem gewünschten Werteniveau genähert. Bei jeder weiteren Injektion werden diese Werte verglichen, gespeichert und nachgeregelt.

Auf diese Weise wird nach Abgleich der Durchsatzmengen und des Druckes im Kreislauf auf den Injektionsdruck nach der Umschaltung auf die Injektion der Injektionsdruck gemessen und gespeichert. Liegt der Injektionsdruck im vorgegebenen Injektionsdruckbereich, wird wiederum mit dem gemessenen und gespeicherten Wert des Injektionsdruckes der Kreislaufabgleich vorgenommen. Liegt der gemessene Wert des Injektionsdruckes außerhalb des vorgegebenen Bereiches, muß die Regelung unterbrochen und die Düse von Hand neu einjustiert werden. Erst danach folgt wieder der Kreislaufabgleich.

Somit ist eine ständige Kontrolle der Werte gegeben und Abweichungen jeglicher Art, wie sie beispielsweise durch Viskositätsänderung einer Komponente auftreten können, werden zwangsläufig sofort ausgeregelt.

## Anspruch

Verfahren zum Herstellen eines Reaktionsgemisches durch Injektion fließfähiger, Schaum- oder Massivstoff bildender Komponenten in eine Mischkammer, wobei die Komponenten

a) kontinuierlich gefördert und
ba) miteinander vermischt oder
bb) im Kreislauf geführt werden und wobei für jede Komponente
c) die Durchsatzmenge vorgewählt wird,
d) der Injektionsdruck grob eingestellt wird und
e) der Kreislaufdruck grob eingegrenzt wird,
f) die Durchsatzmenge und der Kreislaufdruck durch Verstellung einer Dosierpumpe bzw. eines Drosselorgans geregelt werden und
g) die vorgewählten Werte gemäß c) und e) in einen Steuerungsrechner eingespeist werden,
dadurch gekennzeichnet daß
h) der Mischvorgang eingeleitet wird,
i) der Injektionsdruck gemessen und der Meßwert abgespeichert wird,
j) auf Kreislaufförderung rückgeschaltet wird,
k) der gemessene und abgespeicherte Wert des Injektionsdrucks als neuer Sollwert für den Kreislauf verwendet wird und
l) der Meß- und Regelvorgang gemäß f) und h) bis k) fortlaufend erneut eingeleitet wird.

## Claim

A method of producing a reaction mixture by injecting flowable, foam-forming or solid-forming components into a mixing chamber, wherein the components

a) are conveyed continuously and
ba) are mixed together or
bb) are circulated and wherein for each component
c) the quantitative rate of flow is preselected,
d) the injection pressure is roughly adjusted and
e) the circulatory pressure is roughly limited,

f) the quantitative rate of flow and the circulation pressure are controlled by adjusting a metering pump and a throttling means and

g) the preselected values according to c) and e) are fed into control computer, characterised in that

h) the mixing process is initiated,

i) the injection pressure is measured and the measured value stored,

j) the apparatus is switched back to circulation,

k) the measured and stored value of the injection pressure is used as a new desired value for the circulation and

l) the measuring and control process according to f) and h) to k) is successively reintroduced.

**Revendication**

Procédé pour produire un mélange réactionnel par injection, dans une chambre de mélange, de composants fluides formateurs de matière mousse ou de matière homogène, selon lequel :

a) on débite les composants en continu et

ba) on les mélange ensemble ou

bb) on les recycle en circuit fermé et selon lequel, pour chaque composant,

c) on présélectionne le débit,

d) on ajuste la pression d'injection approximativement et

e) on limite la pression de recyclage approximativement,

f) on règle le débit et la pression de recyclage par réglage d'une pompe de dosage respectivement d'un organe d'étranglement et

g) on introduit les valeurs présélectionnées selon c) et e) dans un ordinateur de commande, caractérisé en ce qu'il consiste à :

h) déclencher l'opération de mélange,

i) mesurer la pression d'injection et mémoriser la valeur mesurée,

j) commuter le dispositif mélangeur au recyclage,

k) utiliser la valeur mesurée et mémorisée de la pression d'injection comme nouvelle valeur de consigne pour la pression de recyclage, et à

l) redéclencher sans cesse le processus de mesure et de réglage selon f) et h) à k).

FIG. 1

FIG. 2

0 025 871

2